## Europäisches Patentamt
## European Patent Office
## Office européen des brevets

(11) Numéro de publication: **0 237 364**
**A1**

# DEMANDE DE BREVET EUROPEEN

(21) Numéro de dépôt: **87400030.0**

(22) Date de dépôt: **09.01.87**

(51) Int. Cl.⁴: **G 02 B 27/04**
**G 02 B 27/22**

(30) Priorité: **09.01.86 FR 8600213**

(43) Date de publication de la demande.
**16.09.87 Bulletin 87/38**

(84) Etats contractants désignés:
**BE CH DE ES GB IT LI LU NL SE**

(71) Demandeur: **STEREOSCOPES LESTRADE et Cie. S.A.**
**10, avenue des Acacias**
**F-65500 Vic-en-Bigorre (FR)**

(72) Inventeur: **Lestrade, Robert**
**17 Lotissement Batailles Route d'Artagnan**
**F-65500 Vic-En-Bigorre (FR)**

(74) Mandataire: **CABINET BONNET-THIRION**
**95 Boulevard Beaumarchais**
**F-75003 Paris (FR)**

(54) **Dispositif déployable pour visionner un couple de vues stéréoscopiques.**

(57) La présente invention concerne un dispositif déployable pour visionner un couple de vues stéréoscopiques, du genre comportant une face frontale (11) et un élément déployable (12) constitué d'une seule et même bande de papier ou de carton présentant deux paires de faces opposées (14, 16 ; 15, 17), encore appelées panneaux intermédiaires, et un panneau entretoise (36), lesdites paires de faces opposées étant constituées de deux panneaux transversaux (14, 16), d'un panneau optique (15), et d'un panneau porte vues (17), ledit panneau entretoise s'étendant en diagonale entre deux coins opposés de l'élément déployable lorsque ledit dispositif est en position déployée. L'élément déployable est solidarisé à la face frontale (11) par son panneau optique (15), et deux panneaux d'extrémité (13, 18) de l'élément déployable sont solidarisés entre eux pour réaliser ledit panneau entretoise (36).

EP 0 237 364 A1

**Description**

"Dispositif déployable pour visionner un couple de vues stéréoscopiques"

La présente invention concerne un dispositif déployable pour visionner un couple de vues stéréoscopiques fixes.

Il est déjà connu, notamment par le brevet FR 2.558.605, des dispositifs déployables pour visionner un couple de vues stéréoscopiques fixes, communément appelés stéréoscopes.

Ces stéréoscopes déployables peuvent être de dimensions diverses, par exemple de celle d'une carte postale et peuvent être glissés à l'intérieur d'une enveloppe lorsqu'ils sont en position non déployée. Ces stéréoscopes peuvent porter sur une face une vue photographique et sur l'autre face (à l'état plié) une place réservée à la correspondance.

Pour des raisons évidentes de simplicité et d'économie, les stéréoscopes déployables réalisés selon ce brevet sont constitués d'une seule et même feuille de papier ou carton, munie de lignes de pliage adéquates. Or, le fait qu'une seule et même feuille de papier soit utilisée implique que le stéréoscope ne puisse être facilement renforcé sur certaines de ses parties et notamment la partie entretoise, ce qui est un inconvénient important, car une déformation du stéréoscope déployable, dûe à une structure insuffisamment rigide, entraîne un mauvais alignement des lentilles et des vues stéréoscopiques, la vision en relief des vues stéréoscopiques est alors pour le moins détériorée et voire même impossible.

En outre, le fait de n'utiliser qu'une seule et même feuille pour la réalisation de stéréoscopes déployables implique que pour ceux qui se présentent sous la forme d'une carte postale, et qui donc sont munis sur une de leurs faces d'une vue photographique, que cette vue soit traversée pour des lignes de pliage à l'aspect inesthétique, qui à l'usage entraîneraient la détérioration de la vue photographique elle-même.

D'après le brevet U.S. 2.986.830 il est également connu des stéréoscopes du type de ceux décrits précédemment, mais qui au lieu d'être déployables sont démontables. L'inconvénient majeur de tels dispositifs réside dans le fait qu'après quelques montages et démontages, les moyens permettant l'assemblage (en général des languettes) se détériorent et que le dispositif devient rapidement inutilisable.

Un autre inconvénient notable présenté par le stéréoscope selon le brevet U.S. No 2 986 830 est que bien que la bande de carton ou de papier soit repliée sur elle-même par endroit, pour former une partie entretoise renforcée, les deux couches de carton ne sont pas solidarisées l'une à l'autre et de ce fait l'ensemble manque de rigidité.

D'autre part, les stéréoscopes déployables proposés jusqu'ici sont munis de vues stéréoscopiques de petites dimensions car des vues de plus grandes dimensions impliqueraient un renforcement de la structure, la petite taille des vues stéréoscopiques ayant pour conséquence première un manque de luminosité et de mise en valeur des détails.

La présente invention a pour but de créer un dispositif palliant l'ensemble de ces inconvénients, à savoir un dispositif déployable pour visionner un couple de vues stéréoscopiques fixes, qui soit renforcé dans les zones les plus sollicitées, qui ne présente pas de lignes de pliage sur sa face avant, qui ne soit pas constitué par une seule et même feuille de papier ou carton, et qui peut être muni de vues stéréoscopiques de grandes dimensions.

A cet effet, l'invention propose un dispositif déployable pour visionner un couple de vues stéréoscopiques, du genre comportant une face frontale et un élément déployable constitué d'une seule de même bande de papier ou de carton présentant deux paires de faces opposées, encore appelées panneaux intermédiaires, et un panneau entretoise, les dites paires de faces opposées étant constituées de deux panneaux transversaux, d'un panneau optique et d'un panneau porte vues, ledit panneau entretoise s'étendant en diagonale entre deux coins opposés de l'élément déployable lorsque ledit dispositif est en position déployée, caractérisé en ce que l'élément déployable est solidarisé à la face frontale par son panneau optique, deux panneaux d'extrémité de la bande de carton ou papier étant solidarisés entre eux pour réaliser ledit panneau entretoise.

Grâce à ces dispositions, le dispositif réalisé ne présente aucune ligne de pliage sur la face réservée à une illustration, le plus souvent photographique, comporte des parties renforcées aux endroits nécessaires, notamment au niveau du panneau entretoise, et peut donc recevoir des vues stéréoscopiques de grandes dimensions.

D'autres objets et caractéristiques de l'invention ressortiront d'ailleurs de la description qui va suivre donnée à titre d'exemple en référence aux dessins annexés dans lesquels :

la figure 1 est une vue en perspective du dispositif selon l'invention en position déployée ;

la figure 2A est une vue en élévation du dispositif selon la figure 1 avec coupe partielle de la face frontale au niveau des lentilles ;

la figure 2B est une vue correspondante à la figure 2A montrant un deuxième mode de réalisation de l'invention ;

les figures 3A et 3B sont des vues en élévation du dispositif selon la figure 1 en position semi déployée et non déployée respectivement.

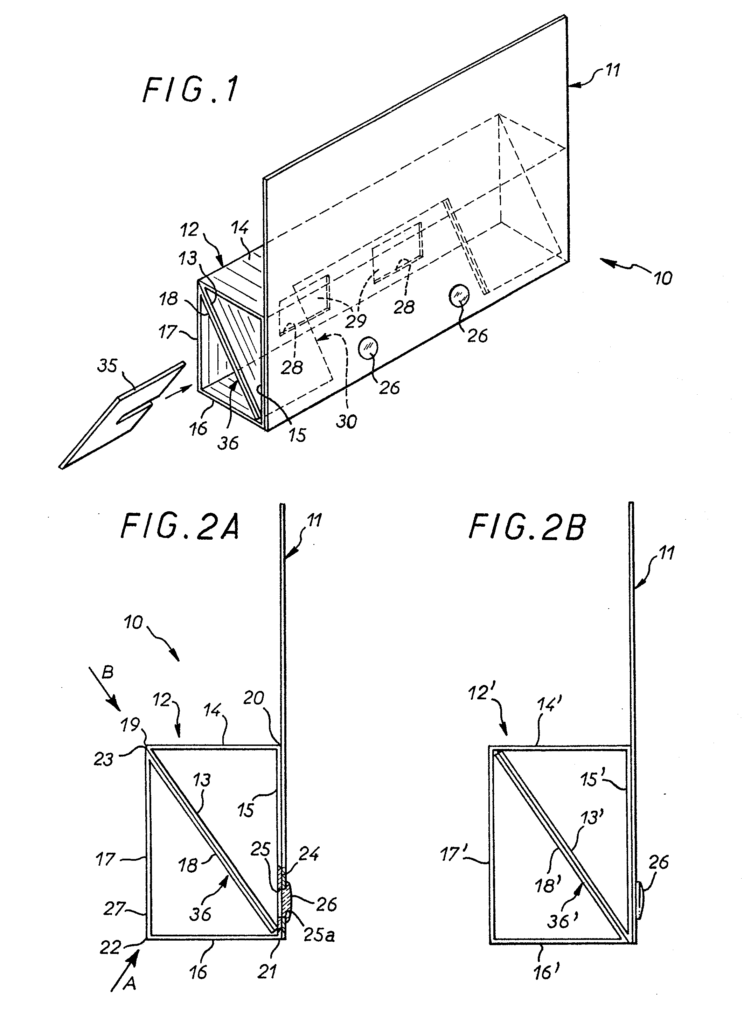

Le dispositif selon l'invention (figures 1 et 2A) est constitué d'une face frontale 11, au dos de laquelle est collé un élément déployable 12 formé dans une seule feuille ou bande de carton et muni de lignes de pliage adéquates parallèles les unes aux autres. Cette feuille de papier ou de carton (figure 2A) se compose de quatre panneaux intermédiaires 14, 15, 16 et 17 et de deux panneaux d'extrémité 13 et 18, délimités par les lignes de pliage 19 à 23. Les quatre panneaux intermédiaires constituent ainsi deux paires de faces opposées et le panneau 15 est appelé panneau optique. Le panneau d'extrémité 13 et le panneau optique 15 sont préencollées sur une même face de la bande de carton. Les lignes de pliage sont marquées dans le carton de manière connue en soi. Les panneaux d'extrémité 13 et 18 présentent en leur milieu un large évidement 30 (voir figure 1) dont l'utilité sera explicitée plus loin. Les panneaux 14 et 16 sont appelés panneaux transverseaux et le panneau 17 est appelé panneau porte vues.

Le panneau optique 15 est muni à sa partie inférieure 24 de deux orifices 25 espacés (un seul est visible à la figure 2A).

La face frontale 11 est également munie d'orifices 25a pareillement espacés. Une lentille 26 est insérée dans chacun de ces orifices 25a.

La panneau porte vues 17 est muni à sa partie inférieure 27 d'orifices 28 (voir figure 1) dans chacun desquels est insérée une vue stéréoscopique 29. Les centres de chacune de ces vues sont espacés l'un de l'autre de la même distance que les centres de chacune des lentilles ou optiques portées par la face frontale.

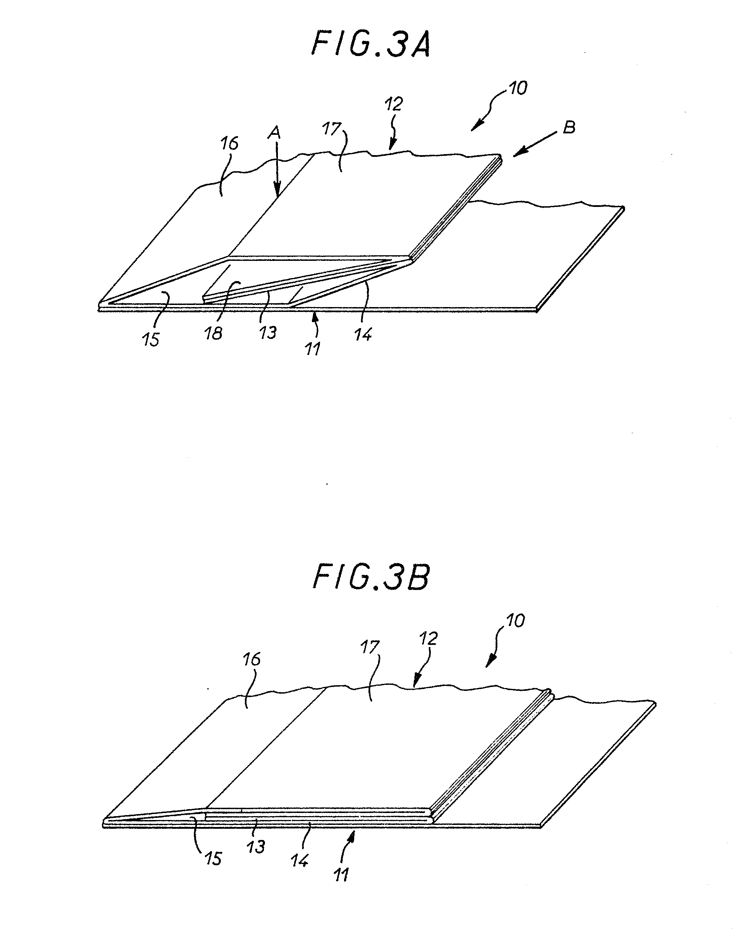

Lors du montage de ce dispositif, le panneau optique 15 est collé au dos et à la partie inférieure de la face frontale 11, ceci de telle sorte que les orifices 25 et 25a soient alignés. Les panneaux d'extrémité 13 et 18 sont également collés entre eux comme le montre la figure 2A. Le dispositif ainsi monté est alors prêt à l'emploi. Lorsque le dispositif se présnte à l'état plié, comme à la figure 3B, il suffit pour le déployer d'exercer une force selon la direction de la flèche B (figure 3A) sur la ligne de pliage 19.

Cette force doit être maintenue durant tout le temps où l'on désire que le dispositif déployable selon l'invention reste en position déployée. Dans cette position le panneau entretoise, constitué par la solidarisation des deux panneaux d'extrémité 13 et 18, se trouve placé selon une diagonale de l'élément déployable, entre deux coins opposés de cet élément, de sorte à éloigner ces coins l'un de l'autre et à maintenir le dispositif en position déployée, comme montré à la figure 1.

La distance séparant les centres des deux lentilles 26 correspond à l'écartement moyen des yeux d'un être humain. En plaçant ses yeux devant les lentilles 26, le couple de vues stéréoscopiques 29 apparaît alors comme une seule diapositive en relief, étant donné que le panneau entretoise 36 constitué par les panneaux d'extrémité 13 et 18 comporte en son milieu un évidement 30 permettant de voir les vues stéréoscopiques fixées sur le panneau porte vues 17.

Pour replier le dispositif il suffit d'exercer une force selon le sens de la flèche A (figures 2A et 3A) pour que le dispositif prenne la configuration montrée à la figure 3B. Dans cette configuration l'encombrement du dispositif est faible, ce qui permet de l'introduire dans une enveloppe comme une carte postale ordinaire.

La figure 2B montre un autre mode de réalisation du dispositif selon l'invention.

Les références des différents panneaux ont été primées pour les différencier du mode de réalisation précédent.

Les panneaux situés au même endroit conservent la même fonction que dans le mode de réalisation précédent.

L'entretoise 36′ est réalisée ici par la solidarisation des panneaux d'extrémité 13′ et 18′ et est toujours placée selon la même diagonale que dans le mode de réalisation précédent, son extrémité libre se trouve cependant éloignée de la face frontale 11.

L'avantage d'un tel mode de réalisation se situe notamment dans le fait que l'angle ouvert de l'élément démontable est situé en bas de la face frontale 11 et donc n'est pas autant visible que dans le cas du premier mode de réalisation.

D'autre part étant situé en bas, cet angle est moins sujet aux détériorations car ce n'est pas sur lui que l'on exerce des efforts pour déployer ou refermer l'élément déployable.

Il est à noter que grâce à la fabrication du dispositif en deux parties, il est possible en collant certains panneaux entre eux (notamment les panneaux d'extrémité) de rigidifier certaines parties du dispositif. D'autre part, grâce à un tel dispositif la face frontale 11 ne comporte aucune ligne de pliage et donc lorsqu'une photo se trouve collée sur cette face frontale ou constitue cette face frontale, elle n'est pas détériorée par les lignes de pliage. De ce fait on peut effectuer le déploiement du présent dispositif sans plier la photo située sur la face frontale.

Il est à noter que le présent dispositif a été décrit comme étant réalisé en papier ou carton, mais qu'il est bien sûr réalisable en d'autre type de matériaux, par exemple en matière plastique, etc ...

De même les vues stéréoscopiques 29 sont généralement constituées par des diapositives, éventuellement protégées par des films transparents protecteurs sur leur face interne, et recouvertes d'écrans de diffusion opaques sur leur face externe de sorte à les rendre plus lumineuses. Il est à noter que grâce à la structure renforcée du panneau entretoise, les vues stéréoscopiques supportées par la face porte vues 17 peuvent être de grande dimension, par exemple $33.10^{-2}$ x $23.10^{-2}$ m, sans que cela nuise à la rigidité de l'ensemble.

Dans les exemples précédemment décrits, l'élément déployable est fixé à la partie inférieure du dos de la face frontale 11, il pourrait également être situé au milieu ou à la partie supérieure de ce dos ou encore être collé toujours sur ce dos, non plus longitudinalement, mais transversalement.

Il est à noter que pour certains applications, Il peut être intéressant que le dispositif déployé puisse être maintenu dans cette position de sorte, par exemple, à être présenté. Dans ce cas, il est prévu d'introduire dans le stéréoscope déployé une contre-entretoise 35 (figure 1) maintenant en position déployée le dispositif de sorte à ce qu'il puisse être posé sur un support horizontal. Cette contre entretoise vient alors se placer entre deux coins opposés de l'élément déployable et selon la diagonale opposée à celle constituée par le panneau entretoise. Cette contre entretoise est avantageusement munie d'une encoche lui permettant de se fixer sur le panneau entretoise. Ce panneau entretoise peut également être muni d'une encoche (non représentée) correspondant à celle de la contre entretoise, de sorte que celle-ci puisse se glisser à l'intérieur de l'élément déployable sans dépasser de celui-ci.

Le dispositif selon l'invention ainsi muni de sa contre entretoise a l'avantage d'être "auto-portant", c'est-à-dire qu'il se maintient seul en position, déployée.

Bien entendu, l'invention n'est pas limitée au mode de réalisation choisi, et il est possible d'envisager d'autres variantes sans sortir du cadre de l'invention, par exemple la forme de l'évidement 30 du panneau entretoise 36 peut être modifiée ou encore les vues stéréoscopiques peuvent être interchangeables et non fixées, etc ...

**Revendications**

1) Dispositif déployable pour visionner un couple de vues stéréoscopiques, du genre comportant une face frontale (11) et un élément déployable (12, 12') constitué d'une seule et même bande de papier ou de carton présentant deux paires de faces opposées (14, 16 ; 15, 17 ; 14' , 16' ; 15', 17'), encore appelées panneaux intermédiaires, et un panneau entretoise (36, 36'), les dites paires de faces opposées étant constituées de deux panneaux transversaux (14, 16 ; 14', 16'), d'un panneau optique (15, 15'), et d'un panneau porte vues (17, 17'), ledit panneau entretoise s'étendant en diagonale entre deux coins opposés de l'élément déployable lorsque ledit dispositif est en position déployée, caractérisé en ce que l'élément déployable est solidarisé à la face frontale (11) par son panneau optique (15, 15'), deux panneaux d'extrémité (13, 18 ; 13', 18') de l'élément déployable étant solidarisés entre eux pour réaliser ledit panneau entretoise (36, 36').

2) Dispositif selon la revendication 1, caractérisé en ce que la solidarisation du panneau optique (15, 15') avec la face frontale (11), et la solidarisation des deux panneaux d'extrémité (13, 18, 13', 18') entre eux sont effectuées par collage.

3) Dispositif selon la revendication 1 ou 2, caractérisé en ce que les panneaux intermédiaires (14, 15 ; 16, 17 ; 14', 15' ; 16' 17') et les panneaux d'extrémité de l'élément déployable sont délimités par des lignes de pliage (19 à 23) parallèles entre elles, tandis que la face frontale (11) ne présente aucune ligne de pliage.

4) Dispositif selon l'une quelconque des revendications précédentes, caractérisé en ce que le panneau d'extrémité (13, 13') et le panneau optique (15, 15') sont préencollés sur une même face d'une bande constituant l'élément déployable.

5) Dispositif selon l'une quelconque des revendications précédentes, caractérisé en ce que la face frontale (11) porte une vue photographique.

6) Dispositif selon l'une quelconque des revendications précédentes, caractérisé en ce que la face frontale (11) porte des lentilles (26).

7) Dispositif selon l'une quelconque des revendications précédentes, caractérisé en ce qu'une contre entretoise (35) est engagée dans l'élément déployable, de sorte à maintenir celui,-ci en position déployée.

8) Dispositif selon la revendication 7, caractérisé en ce que la contre entretoise (35) est placée selon la diagonale de l'élément déployable opposée à la diagonale constituée par le panneau entretoise (36, 36').

FIG.1

0237364

FIG.2A

FIG.2B

0237364

## FIG.3A

## FIG.3B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,A | US-A-2 986 830  (R. UNDERBERG et al.)<br>* Revendication 1 * | 1 | G 02 B  27/04<br>G 02 B  27/22 |
| | --- | | |
| D,A | FR-A-2 558 605  (STEREOSCOPES LESTRADE & CIE.)<br>* Revendication 1 * | 1 | |
| | ----- | | |

DOMAINES TECHNIQUES
RECHERCHES (Int. Cl.4)

G 02 B  27/00

Le présent rapport de recherche a été établi pour toutes les revendications

| Lieu de la recherche | Date d'achèvement de la recherche | Examinateur |
|---|---|---|
| LA HAYE | 14-04-1987 | POPINEAU G.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82